# EUROPÄISCHE PATENTSCHRIFT

(11) **EP 2 296 911 B1**
(45) Veröffentlichungstag und Bekanntmachung des Hinweises auf die Patenterteilung: **10.08.2016**
(21) Anmeldenummer: 09775926.0
(22) Anmeldetag: 26.06.2009
(51) Int. Cl.: B42D 25/00, B42D 25/29, G06K 19/08

(54) **VERFAHREN ZUR HERSTELLUNG EINES SICHERHEITS- UND/ODER WERTPRODUKTS MIT ZUFALLSMUSTER UND KORRELIERTER IDENTZEICHENFOLGE**
METHOD FOR PRODUCING A SECURITY AND/OR VALUABLE PRODUCT WITH A RANDOM PATTERN AND A CORRELATED IDENTIFICATION CHARACTER SEQUENCE
PROCÉDÉ DE FABRICATION D'UN PRODUIT DE SÉCURITÉ ET/OU DE VALEUR PRÉSENTANT UN MOTIF ALÉATOIRE ET UNE CHAÎNE DE CARACTÈRES D'IDENTIFICATION CORRÉLÉE

(30) Priorität: 16.07.2008 DE 102008034021
(43) Veröffentlichungstag der Anmeldung: 23.03.2011
(73) Patentinhaber: Bundesdruckerei GmbH, 10985 Berlin (DE); Merck Patent GmbH, 64293 Darmstadt (DE)
(72) Erfinder: MUTH, Oliver, 12277 Berlin (DE); PAESCHKE, Manfred, 16352 Basdorf (DE); KRIETSCH, Burkhard, 64807 Dieburg (DE); KUNTZ, Matthias, 64342 Seeheim-Jugenheim (DE); WALTER, Andreas, 61440 Oberursel/Taunus (DE)
(74) Vertreter: Jungblut, Bernhard Jakob
(86) Internationale Anmeldenummer: PCT/DE2009/000915
(87) Internationale Veröffentlichungsnummer: WO 2010/006582

(56) Entgegenhaltungen:
- WO-A-2005/080088
- FR-A- 2 765 014

## Beschreibung

### Gebiet der Erfindung

Die Erfindung betrifft ein Verfahren zur Herstellung eines Sicherheits- und/oder Wertprodukts, insbesondere eines Sicherheits- und/oder Wertdokuments, mit den folgenden Verfahrensschritten: ein Substrat wird mit einer Markierungsschicht, welche zumindest eine und unter Bedingungen der Anregung der Lumineszenz Licht emittierende partikuläre Lumineszenzsubstanz enthält, beschichtet, wobei die Partikel der Lumineszenzsubstanz statistisch lateral verteilt sind, die Markierungsschicht wird Anregungsbedingungen ausgesetzt, bei welchen die Lumineszenzsubstanz luminesziert, wobei das emittierte Licht ein für das Sicherheits- und/oder Wertprodukt individuelles Zufallsmuster bildet, das Zufallsmuster wird messtechnisch erfasst und dem erfassten Zufallsmuster wird eine Zeichenfolge zugeordnet, die zugeordnete Zeichenfolge wird auf dem Sicherheits- und/oder Wertprodukt als Identzeichenfolge lesbar appliziert.

Die Erfindung betrifft des Weiteren ein mittels eines solchen Verfahrens herstellbares Sicherheits- und/oder Wertprodukt sowie ein Verfahren zur Verifizierung eines solchen Sicherheits- und/oder Wertprodukts.

### Stand der Technik und Hintergrund der Erfindung

Aus der Literaturstelle DE 103 04 805 A1 ist ein Verfahren zur Herstellung von Sicherheitskennzeichen bekannt. Dabei wird ein Muster aus Partikeln, z.B. Metallpartikel, gebildet, die sich zufällig in der Markierungsschicht verteilen. Beim Auslesen, beispielsweise mit einem Mikroskop wird ein Zufallsmuster erkannt, welches mit sehr hoher statistischer Wahrscheinlichkeit für des betreffenden Sicherheits-.und/oder Wertprodukt einzigartig ist, i.e. verschiedene Sicherheits- und/oder Wertprodukte unterscheiden sich durch die jeweiligen Zufallsmuster. Das Zufallsmuster eines Sicherheits- und/oder Wertprodukts wird ortsaufgelöst und intensitätsaufgelöst aufgenommen, aus der Aufnahme wird eine charakteristische Zeichenfolge generiert und die Zeichenfolge wird auf dem Sicherheits- und/oder Wertprodukt als Identzeichenfolge angebracht. Durch Vergleich einer erneuten Aufnahme des Zufallsmusters, Generierung der Zeichenfolge hieraus und deren Vergleich mit der ebenfalls ausgelesenen Identzeichenfolge kann dann die Echtheit des Sicherheits- und/oder Wertprodukts bestimmt werden. Ein ähnliches Verfahren, basierend auf anderen zufällig verteilten Materialien, ist aus der Literaturstelle US 4,218,674 bekannt.

Diese Verfahren sind in sicherheitstechnischer Hinsicht weiter verbesserungsfähig.

Aus der Literaturstelle EP 0 991 523 B1 sind Pigmente bekannt, welche eine Lasermarkierung einer Schicht aus einem organischen Polymer ermöglichen.

Aus der Literaturstelle WO 2005/115766 A1 ist es bekannt, einer Markierungsschicht mit einer Elektrolumineszenzsubstanz ein elektrisch leitfähiges Pigment zuzugeben, wodurch eine kontaktlose Anregung der Elektrolumineszenz in für eine Detektion der Lumineszenz hinreichenden Intensität bewirkt werden kann.

Aus der Literaturstelle EP 1 631 461 B1 ist es bekannt einer Markierungsschicht mit einer Elektrolumineszenzsubstanz ein Pigment mit besonders hoher relativer Permittivität zuzugeben, wodurch im Wege der Feldverdrängung hohe Feldstärken bei der Elektrolumineszenzsubstanz und so hohe Lumineszenzemission bei moderaten Anregungsbedingungen erzielt werden.

Aus den Literaturstellen WO 2005/08088A und FR 2 765 014 A sind ebenfalls ein Sicherheits- und/oder Wertprodukt sowie ein Verfahren zu dessen Verifizierung bekannt.

### Technisches Problem der Erfindung

Der Erfindung liegt das technische Problem zu Grunde, ein Sicherheits- und/oder Wertprodukt mit einem Lumineszenzmuster sowie hiermit korrelierter und beispielsweise auf dem Sicherheits- und/oder Wertprodukt angebrachter Identzeichenfolge anzugeben, welches eine höhere Fälschungssicherheit aufweist.

Grundzüge der Erfindung und bevorzugte Ausführungsformen.

Zur Lösung dieser technischen Probleme lehrt die Erfindung ein Verfahren zur Herstellung eines Sicherheits- und/oder Wertprodukts, insbesondere eines Sicherheits- und/oder Wertdokuments, mit den folgenden Verfahrensschritten: a) ein Substrat wird mit einer Markierungsschicht, welche zumindest zwei verschiedene und unter verschiedenen Bedingungen der Anregung der Lumineszenz Licht emittierende partikuläre Lumineszenzsubstanzen enthält, beschichtet, wobei die Partikel der Lumineszenzsubstanzen statistisch lateral verteilt sind, b1) die Markierungsschicht wird Anregungsbedingungen ausgesetzt, bei welchen die Lumineszenzsubstanzen lumineszieren, wobei das emittierte Licht ein für das Sicherheits- und/oder Wertprodukt individuelles Zufallsmuster bildet, und/oder b2) die Markierungsschicht wird Anregungsbedingungen ausgesetzt, bei welchen nur eine der Lumineszenzsubstanzen luminesziert, wobei das emittierte Licht ein für das Sicherheits- und/oder Wertprodukt individuelles Zufallsteilmuster bildet, c) das Zufallsmuster und/oder das Zufallsteilmuster wird messtechnisch erfasst und dem erfassten Zufallsmuster und/oder dem erfassten Zufallsteilmuster wird ggf. jeweils eine Zeichenfolge in vorzugsweise eineindeutiger Weise zugeordnet, d) die in Stufe c) zugeordnete Zeichenfolge wird oder die zugeordneten Zeichenfolgen werden auf dem Sicherheits- und/oder Wertprodukt als Identzeichenfolge oder Identzeichenfolgen lesbar appliziert und/oder hierin lesbar integriert und/oder in einer zentralen oder dezentralen Datenbank registriert.

In der Variante, wobei sowohl die Stufe b1) als auch die Stufe b2) ausgeführt werden, können die Identzeichenfolge des Zufallsmusters und die Identzeichenfolge des Zufallsteilmusters mit einander korreliert oder nicht miteinander korreliert sein. Der Begriff der Korrelation meint hierbei eine beliebige Verknüpfung, sei es durch gemeinsame Applikation auf oder Integration in das Dokument, sei es durch datentechnische Zuordnung in der Datenbank. Insbesondere kann eine der Identzeichenfolgen (teilweise oder insgesamt) einen Bestandteil der anderen Identzeichenfolge bilden. Auch kann eine der Identzeichenfolgen (teilweise oder insgesamt) durch einen vorgegebenen Algorithmus in einen Bestandteil der anderen Zeichenfolge transformierbar sein und umgekehrt.

Mit der Erfindung wird eine höhere Sicherheit erreicht, da die bei einer Verifikation anzuwendende Weise der Anregung der Lumineszenz einen zusätzlichen Freiheitsgrad darstellt. Es reicht für eine Nachbildung nicht aus, lediglich die Lumineszenz anzuregen, sondern vielmehr müßte für die Nachbildung auch bekannt sein, unter welchen Anregungsbedingungen die Identzeichenfolge generiert wurde. Dies wird dadurch gewährleistet, dass zwei verschiedene und unter verschiedenen Anregungsbedingungen lumineszierende Substanzen eingesetzt werden, wobei entweder für die Erzeugung der Identzeichenfolge beide Substanzen angeregt werden müssen, oder lediglich eine definierte bzw. vorgegebene Substanz angeregt wird. Dies ist dabei unabhängig von einer (separaten bzw. vereinfachten) visuellen Verifikation durch Feststellung der Lumineszenz, beispielsweise unter UV Belichtung, deren Ergebnis jedoch keinerlei Rückschlüsse auf die zutreffende Identzeichenfolge liefert. Mit der Erfindung wird zudem erreicht, dass Rückschlüsse auf den Algorithmus, mittels welchem die Identzeichenfolge generiert wurde, erheblich erschwert werden.

Im Rahmen der Erfindung bestehen vielfältige Möglichkeiten der weiteren Ausbildung.

Besonders bevorzugt ist es, wenn eine erste Lumineszenzsubstanz ein partikuläres Elektroluminophores ist und in der Markierungsschicht zusätzlich ein elektrisch leitfähiges Pigment enthalten ist.

Der Begriff des Sicherheits- und/oder Wertprodukts umfasst insbesondere Sicherheits- und/oder Wertdokumente. Sicherheits- und/oder Wertdokumente sind beispielsweise: Personalausweise, Reisepässe, ID-Karten, Zugangskontrollausweise, Visa, Steuerzeichen, Tickets, Führerscheine, Kraftfahrzeugpapiere, Banknoten, Schecks, Postwertzeichen, Kreditkarten, beliebige Chipkarten und Haftetiketten (z.B. zur Produktsicherung oder Visa-Sticker). Beispiele für Sicherheits- und/oder Wertprodukte, die nicht unter den begriff des Sicherheits- und/oder Wertdokuments fallen sind Etiketten, Begleitscheine, Kontrollscheine, Gutscheine sowie alle Erzeugnisse des täglichen Lebens, die gefälscht werden können und die durch das Aufbringen des erfindungsgemäßen Sicherheitsmerkmals eindeutig als Original identifiziert werden können Ein Substrat ist eine flächige Trägerstruktur auf Basis von synthetischen und/oder natürlichen organischen Polymeren. Ein Substrat kann aus einer Schicht oder aus einem gestapelten Verbund von mehreren Schichten bestehen. Grundsätzlich sind alle Werkstoffe, wie in der Technologie der Sicherheits- und/oder Wertprodukte üblich, einsetzbar. Lediglich beispielsweise werden als geeignete Werkstoffe für ein Substrat oder für verschiedene Schichten eines Substrates genannt: Papierwerkstoffe, Druckschichten, Kunststoffe, wie, Polyolefine, Polycarbonate Polytherphthalate und Verbundmaterialien aus Papier und Kunststoffen. Im Falle der Schichten aus Kunststoffen können diese als Folien ausgebildet sein.

Nachdem auf das Substrat die Markierungsschicht aufgebracht ist, kann eine Deckschicht, vorzugsweise aus einem transparenten Kunststoff, auf die Markierungsschicht aufgebracht werden. Es ist auch möglich mehrere verschiedene transparente Deckschichten aufzubringen.

Die Markierungsschicht kann vollflächig auf dem Substrat aufgebracht werden, oder lediglich auf eine Teilfläche des Substrats. In letzterem Fall braucht eine eventuell eingerichtete Deckschicht nur oberhalb der Teilfläche des Substrats, welche die Markierungsschicht trägt, transparent zu sein, kann aber dennoch auch vollflächig das Substrat bedecken und auch vollflächig transparent sein.

Die Markierungsschicht muss nicht als Einzelschicht ausgebildet sein, sondern kann Ihrerseits aus Markierungsteilschichten gebildet sein, welche gestapelt miteinander verbunden sind, wobei zwischen Markierungsteilschichten auch andere (transparente) Schichten zwischengeschaltet sein können. Verschiedene Lumineszenzsubstanzen können dabei in verschiedenen Markierungsteilschichten angebracht sein. Insofern kann das Muster nicht nur über eine laterale Verteilung (in Richtungen parallel zu einer Hauptfläche der Markierungsschicht) der Teilbereiche (wie bei einer Einzelschicht) sondern auch über eine vertikale Verteilung (orthogonal zur Hauptfläche) gebildet sein. In der Regel wird jedoch nur die laterale Verteilung bestimmt werden, wobei bei zusätzlicher vertikaler Verteilung aber auch eine Berücksichtigung der vertikalen Verteilung durch ortsaufgelöste Messung der Lumineszenz mit einem von der Flächennormalen abweichenden und vorgegebenen Inzidenzwinkel erfolgt.

Es ist möglich mehr als zwei verschiedene Lumineszenzsubstanzen einzusetzen, beispielsweise drei, vier oder fünf, wobei diese wiederum in einer einzigen Markierungsschicht oder in verschiedenen Markierungsteilschichten angeordnet werden können.

Die Aufbringung der Markierungsschicht (bzw. der Markierungsteilschichten) kann auf alle fachüblichen Weisen erfolgen. Hierzu gehören auch Drucktechniken. Als Druckverfahren prinzipiell geeignet sind alle in der Herstellung von Sicherheits- und/oder Wertprodukten bekannten und gebräuchlichen Druckverfahren, wie beispielsweise Offsetdruck, Lettersetdruck, Offset-Coating, Flexodruck, Siebdruck, Thermosublimationsdruck, Tiefdruck, insbesondere Rastertiefdruck und Stichtiefdruck, das so genannte Overprint Varnish Verfahren, sowie alle berührungslosen Druckverfahren. Bevorzugt wird die Markierungsschicht im Siebdruckverfahren aufgebracht. Aber auch beispielsweise Rakeln, Streichen, Stempeln, Gießverfahren, Lackierverfahren, Tauchverfahren, Fließverfahren, Walzen- oder Rasterauftragsverfahren oder Auftragung mittels Luftbürste können eingesetzt werden. Alle vorstehenden Verfahren gehen von einer Lösung, Dispersion, Emulsion, oder Paste, enthaltend die Lumineszenzsubstanz sowie zumindest einen Binder, aus, welche mit den genannten Methoden aufgebracht und ggf. dann getrocknet und/oder gehärtet wird. Es ist aber auch möglich, dass die Markierungsschicht als (Polymer-) Folie oder feste Schicht vorgefertigt und dann auf dem Substrat befestigt wird, beispielsweise im Wege des Klebens oder des Laminierens. Die Art des Aufbringens der Markierungsschicht ist aber für die Erfindung völlig unmaßgeblich und die vorstehenden Varianten dienen nur als einige von vielen möglichen Beispielen.

Bevorzugt ist es, wenn die Lumineszenzsubstanzen bei Beleuchtung mit sichtbarem Licht und in Tageslichtstärke mit dem menschlichen Auge nicht wahrnehmbar sind, sondern nur mit Hilfe technischer Hilfsmittel, wie beispielsweise Lupe oder maschienenlesbar mit Detektoren, etc. festgestellt werden kann.

Ein Zufallsmuster bezeichnet eine statistische Verteilung der Lumineszenzsubstanzen innerhalb der Markierungsschicht bzw. Markierungsteilschicht und in Richtungen parallel zu einer Hauptfläche der Markierungsschicht. Es entsteht, bei Betrachtung unter Lumineszenzbedingungen mit hinreichender Auflösung, ein "Sternenhimmel" aus zufällig angeordneten lumineszierenden Punkten.

Ein Zufallsmuster oder ein Zufallsteilmuster sowie eine Zeichenfolge sind einander eineindeutig zugeordnet, wenn exakt ein Zufallsmuster bzw. Zufallsteilmuster einer Zeichenfolge zugeordnet ist und umgekehrt. Demgegenüber wäre beispielsweise eine eindeutige Zuordnung, wenn jedem Zufallsmuster bzw. Zufallsteilmuster exakt eine Zeichenfolge zugeordnet ist, während einer Zeichenfolge mehr als ein Zufallsmuster bzw. Zufallsteilmuster zugeordnet sein kann. Die Zuordnung kann grundsätzlich in beliebiger Weise erfolgen. Bevorzugt ist es, wenn mittels eines vorgegebenen Algorithmus aus dem Zufallsmuster bzw. Zufallsteilmuster die Zeichenfolge berechnet wird. Dann ist eine inhärente Verifikation möglich ohne externe Datenbank, da dann im Zuge der Verifikation nur der vorgegebene Algorithmus auf das gemessene Zufallsmuster bzw. Zufallsteilmuster angewandt werden muss, wobei dann ein direkter Vergleich der so bestimmten Zeichenfolge mit der ausgelesenen Identzeichenfolge möglich ist. Lediglich beispielhaft sei als geeigneter Algorithmus die Berechnung eines Hash-Wertes aus dem Zufallsmuster bzw. Zufallsteilmuster, einschließlich dessen Koordinaten in bezug auf zumindest einen Referenzpunkt des Sicherheits- und/oder Wertprodukts (betrachtet in Projektion orthogonal zu einer Hauptfläche der Markierungsschicht), genannt. Dabei genügt es grundsätzlich, wenn die Zuordnung eindeutig ist, so dass auch bei Hash-Funktionen, je nach Komplexität, sogenannte Kollisionen in gewissem Grade hingenommen werden können. Denn bei der Verifikation wird ja das Zufallsmuster bzw. Zufallsteilmuster ausgelesen, mittels der vorgegebenen Hash-Funktion die Zeichenfolge ermittelt und mit der Identzeichenfolge verglichen. Dabei spielt es keine Rolle, dass im Falle einer Kollision möglicherweise noch ein anderes Sicherheits- und/oder Wert mit einem anderen Zufallsmuster oder Zufallsteilmuster existiert, welches bei Anwendung der Hash-Funktion zu der gleichen Zeichenfolge führt (Kollision). Zweckmäßigerweise wird jedoch die Zielmenge der Hash-Funktion so groß gewählt, dass allenfalls wenige Kollisionen zu erwarten sind. Im Zahlenraum könnte die Zielmenge der Hash-Funktion beispielsweise zumindest 10⁴, besser zumindest 10⁵, vorzugsweise zumindest 10⁶, verschiedene Elemente, beispielsweise alphanumerische Zeichen, groß sein. Bezüglich geeigneter Hash-Algorithmen wird ergänzend auf die einschlägige Fachliteratur hierzu verwiesen.

Die Applikation oder Integration der Identzeichenfolge auf bzw. in das Sicherheits- und/oder Wertprodukt kann mittels aller für die Personalisierung eines Sicherheits- und/oder Wertprodukts üblichen Techniken erfolgen. Dies umfasst das Beschriften, beispielsweise mittels Laser, das Bedrucken, beispielsweise Tintenstrahldruck (engl. Ink Jet), u.v.m. Da das Muster für jedes Sicherheits- und/oder Wertprodukt vorgegeben und so definiert ist, ist für jedes Sicherheits- und/oder Wertprodukt auch die korrelierte Zeichenfolge vorgegeben und definiert.

Eine Identzeichenfolge ist lesbar, wenn sie mit dem menschlichen Auge und/oder mit technischen Hilfsmitteln lesbar ist.

Eine Identzeichenfolge kann beispielsweise als alphanumerische Zeichenfolge ausgebildet sein, beispielsweise als Seriennummer. Es ist aber auch möglich, dass die Identzeichenfolge codiert ist, beispielsweise als Barcode oder dergleichen.

Als Lumineszenzsubstanzen kommen alle fachüblichen Lumineszenz zeigenden Substanzen in Frage. Hierzu gehören fluoreszierende oder phosphoreszierende Substanzen, Photoluminophoren oder Anti-Stokes-Leuchtstoffe, insbesondere aber auch Substanzen, die Elektrolumineszenz zeigen, sogenannte Elektroluminophore.

Bezüglich geeigneter Photoluminophore wird beispielsweise auf die Literaturstelle Ullmann's chemische Enzyklopädie, Wiley Verlag, elektronische Ausgabe, 2007, Stichwort: Luminescent Materials" verwiesen.

Bei Elektroluminophoren handelt es sich um partikuläre Materialien, welche anorganische Verbindungen der Gruppen II und VI des Periodensystems, beispielsweise ZnS oder CdS, die mit Metallen, wie Cu, Mn, oder Ag dotiert oder aktiviert sind. Ebenso können partikuläre lumineszierende Substanzen auf der Basis von überwiegend mit Mn, Sr oder mit seltenen Erden aktivierten Silikaten, Aluminaten, Phosphaten, Wolframaten, Germanaten, Boraten, etc., insbesondere Substanzen auf der Basis von Zn₂SiO₄:Mn oder auch organische Monomere oder Polymere oder Gemische aus den vorgenannten Verbindungen eingesetzt werden. Ergänzend wird auf die Literaturstelle S. Shionoya et al., Phosphor Handbook, insbesondere Kapitel 9, Electroluminescent materials, CRC Press, 1999, verwiesen.

Elektrolumineszierende Substanzen emittieren nach Anregung in einem elektrischen Wechselfeld eine sichtbare Strahlung. Wenn eine Lumineszenzsubstanz Elektrolumineszenz zeigt, erfolgt die Emission sichtbaren Lichts vorzugsweise allein oder überwiegend durch die Anregung in einem elektrischen Wechselfeld und ggf. in geringerem Maße auch durch Anregung durch Bestrahlung mit Licht des ultravioletten oder infraroten Spektralbereiches. Im Falle einer photoluminezierenden Substanz ist es bevorzugt, wenn die Anregung der Lumineszenz mittels UV-Strahlung erfolgt, wobei elektrische Wechselfelder nicht benötigt werden.

Die Partikel der Lumineszenzsubstanz liegen vorzugsweise in Form von mikroverkapselten Verbindungen bzw. Mantel/Kern-Partikel vor, wobei der Kern durch die Lumineszenzsubstanz gebildet ist. Als Materialien für den Mantel kommen sowohl organische Polymere als auch verschiedene Metalloxide in Frage. Die wesentliche Funktion des Mantels besteht in dem Schutz des Kerns vor Umgebungseinflüssen, die der Beständigkeit und Emissionsfähigkeit des Kerns abträglich sein können. Zudem kann mittels des Mantels die Alterungsbeständigkeit erhöht werden. Schließlich kann mittels des Mantels eine Filterfunktion ausgeübt werden, und zwar sowohl bezüglich einfallender Strahlung als auch emittierter Strahlung. So kann beispielsweise im Falle eine elektrolumineszierenden Kerns der Mantel als UV-Filter funktionieren, der eine Lumineszenz bei UV-Einstrahlung zuverlässig unterbindet. Es ist aber auch möglich, eine solche UV-Filterfunktion mittels einer auf den Mantel aufgebrachten Filterschicht zu erreichen.

Es ist auch möglich, die Lumineszenzsubstanz mit anorganischen oder organischen (Absorptions-) Farbstoffen zu versetzen, so dass sich Reflexionsbanden bzw. Absorptionsbanden der Lumineszenzsubstanzen verschieben. Dadurch ist eine Modulation der Emissionswellenlänge und so der Farberscheinung möglich. Dies stellt eine breitere Farbpalette zur Verfügung, als mit den Lumineszenzsubstanzen selbst verfügbar.

Die Lumineszenzsubstanzen können (unabhängig von der verschiedenen Anregung der Lumineszenz) auch verschiedene Emissionswellenlängen zeigen.

Die Partikelgröße partikulärer Lumineszenzsubstanzen kann nach Maßgabe der zur Herstellung der Markierungsschicht verwendeten Technologie gewählt sein. Im Falle beispielsweise der Drucktechniken wird die Partikelgröße typischerweise im Bereich größer 0,2 µm, beispielsweise 5 µm bis 50 µm, insbesondere von 10 bis 50 µm, liegen. Für Techniken, wie beispielsweise das Aufstreichen, kann die Partikelgröße aber auch bis zu 100 µm und mehr, bis zu 500 µm, betragen. Die Angaben sind d₁₀₀-Werte (i.e. 100%, bezogen auf die gesamte Partikelzahl einer untersuchten Partikelmenge sind kleiner oder gleich der o.g. Werte), Auch andere Durchmesserangaben dieser Beschreibung sind stets d₁₀₀-Werte.

In einer vorteilhaften Weiterbildung, wie bereits angesprochen, enthält die Markierungsschicht zusätzlich ein ein elektrisch leitfähiges Material enthaltendes Pigment oder eine Mischung verschiedener solcher Pigmente. Der Zusatz elektrisch leitfähiger Pigmente ist insbesondere beim Einsatz von Elektroluminophoren als Lumineszenzsubstanz vorteilhaft, da damit eine zuverlässige und berührungslose Anregung der Lumineszenz mit elektrischen Wechselfeldern sichergestellt werden kann. Elektrisch leitfähige Pigmente enthalten zumindest eine elektrisch leitfähige Schicht oder bestehen hieraus. Die elektrisch leitfähige Schicht kann beispielsweise ein oder mehrere mittels Dotierung leitfähig gemachte Metalloxide, z.B. Zinnoxid, Zinkoxid, Indiumoxid, und/oder Titanoxid aufweisen bzw. hieraus bestehen. Zur Dotierung kommen Ga, Al, In, Th, Ge, Sn, P, Ar, Sb, Se, Te, W und/oder F in Frage. Es sind auch Materialien einsetzbar, welche auf einer Trägerschicht, beispielsweise auf Basis Titandioxid, synthetischem oder natürlichen Glimmer, anderen Schichtsilikaten, Glas, Siliziumdioxid, und/oder Al₂O₃ basieren und hierauf die elektrisch leitfähige Schicht tragen, vorzugsweise von dieser umhüllt sind. Neben der Trägerschicht und der elektrisch leitfähigen Schicht können auch sonstige Schichten vorhanden sein, beispielsweise enthaltend Metalloxide, Metaloxidhydrate, Metallsuboxide, Metallfluoride, Metallnitride, Metalloxynitride oder Mischungen solcher Substanzen. Vorzugsweise sind die Trägerschicht und/oder sonstige Schichten, sofern vorgesehen, und/oder die elektrisch leitfähige Schicht optisch transparent bzw. im Wesentlichen transparent, d.h. sie transmittieren mindestens 10 %, vorzugsweise mindestens 70 % des auftreffenden Lichtes. Dabei können die transparenten oder semitransparaten Schichten farblos oder farbig sein. Die Farbeigenschaften der elektrisch leitfähigen Pigmente lassen sich auch durch die zusätzlichen Schichten modifizieren, insbesondere, wenn sie sich unterhalb der leitfähigen Schicht bzw. zwischen Trägerschicht und leitfähiger Schicht befinden. Die Aufbringung von sonstigen Schichten auf der elektrisch leitfähigen Schicht kann die Leitfähigkeit der elektrisch leitfähigen Schicht nach Maßgabe von Vorgaben anpassen.

Das elektrisch leitfähige Pigment ist vorzugsweise ein mit mindestens einer elektrisch leitfähigen Metalloxidschicht, insbesondere aus mit Antimon dotiertem Zinnoxid, beschichteter Glimmer. Zusätzlich können auf oder unter der elektrisch leitfähigen Schicht eine oder mehrere Metalloxidschichten, beispielsweise eine Titanoxidschicht, vorgesehen sein.

Der Durchmesser eines elektrisch leitfähigen Pigments liegt vorzugsweise im Bereich von 0,1 µm bis 500 µm, vorzugsweise 2 µm bis 100 µm, besonders bevorzugt 5 µm bis 70 µm. Eine enge Teilchengrößenverteilung ist dabei bevorzugt. Vorzugsweise werden plättchenförmige elektrisch leitfähige Pigmente eingesetzt. Das Aspektverhältnis (Durchmesser / Dicke) bei plättchenförmigen leitfähigen Pigmenten beträgt typischerweise zumindest 2:1, insbesondere zumindest 10:1, besser zumindest 100:1.

Als besonders transparent bei hoher Leitfähigkeit zeigen sich elektrisch leitfähige plättchenförmige Pigmente, deren Anzahl-gewichtete mittlere Kornfläche F50 (Kornfläche: Größe einer Hauptfläche) zumindest 150 µm², insbesondere zumindest 200 µm² ist. Dabei ist es vorteilhaft, wenn der Anzahl-gewichtete Anteil an Pigmenten mit einer Kornfläche von weniger als 80 µm² nicht mehr als 33%, insbesondere weniger als 25%, bezogen auf die Gesamtmenge an elektrisch leitfähigem Pigment, ist. Noch besser ist ein Anteil mit einer Kornfläche kleiner 40 µm² von nicht mehr als 15%, insbesondere nicht mehr als 10%. Diese Verringerung von Feinanteilen verringert die Lichtstreuung und damit eine Trübung der Markierungsschicht.

Geeignete elektrisch leitfähige Pigmente sind beispielsweise von der Merck KGaA kommerziell erhältlich.

In einer weiteren Ausführungsform der Erfindung ist es möglich, dass die Markierungsschicht zusätzlich ein Farbpigment und/oder ein Effektpigment oder eine Mischung verschiedener solcher Pigmente aufweist. Dabei kann es sich beispielsweise um mindestens ein plättchenförmiges Effektpigment und/oder ein organisches oder anorganisches Farbpigment handeln.

Als plättchenförmige Effektpigmente werden plättchenförmige Perlglanzpigmente, überwiegend transparente oder semitransparente Interferenzpigmente sowie Metalleffektpigmente bezeichnet. Auch Flüssigkristallpigmente, so genannte LCPs (Liquid Crystal Pigments), oder strukturierte Polymerplättchen, so genannte holographische Pigmente, zählen hierzu. Diese plättchenförmigen Pigmente sind aus einer oder mehreren Schichten aus gegebenenfalls unterschiedlichen Materialien aufgebaut.

Perlglanzpigmente bestehen aus transparenten Plättchen mit hoher Brechzahl und zeigen bei paralleler Orientierung durch Mehrfachreflexion einen charakteristischen Perlglanz. Solche Perlglanzpigmente, die zusätzlich auch Interferenzfarben zeigen, werden als Interferenzpigmente bezeichnet.

Obwohl natürlich auch klassische Perlglanzpigmente wie TiO₂-Plättchen, basisches Bleicarbonat, BiOCl-Pigmente oder Fischsilberpigmente prinzipiell geeignet sind, werden als plättchenförmige Effektpigmente vorzugsweise Interferenzpigmente oder Metalleffektpigmente eingesetzt, welche auf einem anorganischen plättchenförmigen Träger mindestens eine Beschichtung aus einem Metall, Metalloxid, Metalloxidhydrat oder deren Gemischen, einem Metallmischoxid, Metallsuboxid, Metalloxinitrid, Metallfluorid, BiOCl oder einem Polymer aufweisen. Die Metalleffektpigmente weisen bevorzugt mindestens eine Metallschicht auf.

Der anorganische plättchenförmige Träger besteht vorzugsweise aus natürlichem oder synthetischem Glimmer, Kaolin oder anderen Schichtsilikaten, aus Glas, SiO₂, TiO₂, Al₂O₃, Fe₂O₃, Polymerplättchen, Graphitplättchen oder aus Metallplättchen, wie beispielsweise aus Aluminium, Titan, Bronze, Silber, Kupfer, Gold, Stahl oder diversen Metallegierungen. Bevorzugt sind Träger aus Glimmer, Glas, Graphit, SiO₂, TiO₂ und Al₂O₃ oder deren Gemischen.

Die Größe dieser Träger ist an sich nicht kritisch. Sie weisen in der Regel eine Dicke zwischen 0,01 und 5 µm, insbesondere zwischen 0,05 und 4,5 µm auf. Die Ausdehnung in der Länge bzw. Breite beträgt üblicherweise zwischen 1 und 250 µm, vorzugsweise zwischen 2 und 200 µm und insbesondere zwischen 2 und 100 pm. Sie besitzen in der Regel ein Aspektverhältnis (Verhältnis des mittleren Durchmessers zur mittleren Teilchendicke) von 2:1 bis 25000:1, und insbesondere von 3:1 bis 2000:1.

Bevorzugt besteht eine auf dem Träger aufgebrachte Beschichtung aus Metallen, Metalloxiden, Metallmischoxiden, Metallsuboxiden oder Metallfluoriden und insbesondere aus einem farblosen oder farbigen Metalloxid, ausgewählt aus TiO₂, Titansuboxiden, Titanoxinitriden, Fe₂O₃, Fe₃O₄, SnO₂, Sb₂O₃, SiO₂, Al₂O₃, ZrO₂, B₂O₃, Cr₂O₃, ZnO, CuO, NiO oder deren Gemischen. Beschichtungen aus Metallen sind vorzugsweise aus Aluminium, Titan, Chrom, Nickel, Silber, Zink, Molybdän, Tantal, Wolfram, Palladium, Kupfer, Gold, Platin oder diese enthaltenden Legierungen. Als Metallfluorid wird bevorzugt MgF₂ eingesetzt.

Als plättchenförmige Effektpigmente werden besonders bevorzugt mehrschichtige Effektpigmente eingesetzt. Diese weisen auf einem plättchenförmigen, vorzugsweise nichtmetallischen Träger mehrere Schichten auf, welche vorzugsweise aus den vorab genannten Materialien bestehen und verschiedene Brechzahlen in der Art aufweisen, dass sich jeweils mindestens zwei Schichten unterschiedlicher Brechzahl abwechselnd auf dem Träger befinden, wobei sich die Brechzahlen in den einzelnen Schichten um wenigstens 0,1 und bevorzugt um wenigstens 0,3 unterscheiden. Dabei können die auf dem Träger befindlichen Schichten sowohl nahezu transparent und farblos als auch transparent und farbig oder semitransparent sein.

Ebenso können die sogenannten LCPs, die aus vernetzten, orientierten, cholesterischen Flüssigkristallen bestehen, oder aber auch als holographische Pigmente bezeichnete strukturierte Polymerplättchen als plättchenförmige Effektpigmente eingesetzt werden.

Die vorab beschriebenen plättchenförmigen Effektpigmente können im Sicherheitselement gemäß der vorliegenden Erfindung einzeln oder im Gemisch vorhanden sein.

Die erfindungsgemäß eingesetzten plättchenförmigen Effektpigmente sind vorzugsweise transparent oder semitransparent. Dabei transmittieren semitransparente Pigmente mindestens 10%, transparente Pigmente hingegen mindestens 70% des einfallenden sichtbaren Lichtes. Solche plättchenförmigen Effektpigmente werden bevorzugt verwendet, da ihre Transparenz in einem Sicherheits- und/oder Wertprodukt zu einer großen Vielfalt an möglichen Hinter- oder Untergrundfarben beiträgt und gleichzeitig die Intensität der durch Elektrolumineszenz erzeugten Lichtemission nicht beeinträchtigt.

Bei bestimmten Ausführungsformen der vorliegenden Erfindung ist es jedoch auch möglich, wenn ein plättchenförmiges Effektpigment eingesetzt wird, das wenigstens eine Metallschicht aufweist.

In einer Ausführungsform der vorliegenden Erfindung wird ein plättchenförmiges Effektpigment eingesetzt, welches unter verschiedenen Beleuchtungs- und/oder Betrachtungswinkeln einen unterschiedlichen visuell wahrnehmbaren Farb- und/oder Helligkeitseindruck hinterläßt. Bei unterschiedlichen Farbeindrücken wird diese Eigenschaft als Farbflop bezeichnet. Insbesondere Pigmente, die einen Farbflop aufweisen, erzeugen in den damit hergestellten Sicherheits- und/oder Wertprodukten nicht kopierbare Farb- und Glanzeindrücke, welche mit dem bloßen Auge ohne Hilfsmittel gut wahrnehmbar sind. Solche Pigmente werden auch als optisch variabel bezeichnet. Die optisch variablen plättchenförmigen Effektpigmente weisen beispielsweise unter mindestens zwei verschiedenen Beleuchtungs- oder Betrachtungswinkeln mindestens zwei und höchstens vier, vorzugsweise aber unter zwei verschiedenen Beleuchtungs- oder Betrachtungswinkeln zwei oder unter drei verschiedenen Beleuchturgs- oder Betrachtungswinkeln drei optisch klar unterscheidbare diskrete Farben auf. Vorzugsweise liegen jeweils nur die diskreten Farbtöne und keine Zwischenstufen vor, das heißt, ein klarer Wechsel von einer Farbe zu einer anderen Farbe ist beim Abkippen des Sicherheitselementes, welches die optisch variablen Pigmente enthält, erkennbar. Diese Eigenschaft erleichtert dem Betrachter einerseits das Erkennen des Sicherheitselementes als solches und erschwert gleichzeitig die Kopierbarkeit dieses Merkmales, da in den handelsüblichen Farbkopierern Farbflopeffekte nicht kopiert und reproduziert werden können.

Selbstverständlich sind jedoch auch optisch variable plättchenförmige Effektpigmente einsetzbar, die beim Abkippen über verschiedene Beleuchtungs- und/oder Betrachtungswinkel einen Farbverlauf, d.h. viele verschiedene Farbtöne, wie beispielsweise den typischen Perlglanz, aufweisen. Auch solche diffusen Farbänderungen sind vom menschlichen Auge gut erfaßbar.

Um ihre volle optische Wirkung entfalten zu können, ist es von Vorteil, wenn die erfindungsgemäß eingesetzten plättchenförmigen Effektpigmente in der Markierungsschicht bzw. dem Sicherheits- und/oder Wertprodukt in orientierter Form vorliegen, d.h. sie sind nahezu parallel zu den mit dem Sicherheitselement versehenen Oberflächen des Sicherheitserzeugnisses ausgerichtet. Eine solche Ausrichtung erfolgt in der Regel bereits im wesentlichen mittels der üblichen angewandten Verfahren zur Aufbringung des Sicherheitselementes, wie beispielsweise üblichen Druckverfahren.

Als plättchenförmige Effektpigmente können beispielsweise die im Handel erhältlichen Interferenzpigmente, welche unter den Bezeichnungen Iriodin® oder Securalic® von der Firma Merck KGaA angeboten werden, Mearlin® der Firma Mearl, Metalleffektpigmente der Firma Eckhard sowie goniochromatische (optisch variable) Effektpigmente wie beispielsweise Variochrom® der Firma BASF, Chromafflair® der Firma Flex Products Inc., Helicone® der Firma Wacker oder holographische Pigmente der Firma Spectratec sowie andere gleichartige kommerziell erhältliche Pigmente eingesetzt werden. Diese Aufzählung ist jedoch lediglich als beispielhaft und nicht als abschließend anzusehen.

Als anorganische Farbpigmente sind alle gebräuchlichen transparenten und deckenden Weiß-, Bunt- und Schwarzpigmente, wie beispielsweise Berliner Blau, Bismutvanadat, Goethit, Magnetit, Hämatit, Chromoxid, Chromhydroxid, Cobaltaluminat, Ultramarin, Chrom-Eisen-Mischoxide, Spinelle wie Thenards Blau, Cadmiumsulfide und -selenide, Chromat-Pigmente oder Ruß geeignet, während als organische Farbpigmente insbesondere Chinacridone, Benzimidazole, Kupferphthalocyanin, Azopigmente, Perinone, Anthanthrone, weitere Phthalocyanine, Anthrachinone, Indigo, Thioindigo und deren Derivate, oder Karminrot zu nennen sind. Generell können sämtliche, insbesondere im Druckbereich gebräuchlichen, organischen oder anorganischen Farbpigmente eingesetzt werden.

Zur Abschirmung gegen ultraviolette Strahlung können auch Pigmente eingesetzt werden, welche UV-Licht absorbieren. Von diesen seien Titandioxid und Zinkoxid nur beispielhaft genannt.

Die Partikelgröße der anorganischen und organischen Farbpigmente ist nicht kritisch, muss jedoch an die Erfordernisse der Applikation des Sicherheitselementes auf oder in einem Sicherheitserzeugnis, beispielsweise mit einem Druckverfahren, angepasst werden. Es gilt Analoges, wie zu der Lumineszenzsubstanz und/oder den elektrisch leitfähigen Pigmenten angemerkt.

Der Einsatz eines lasersensitiven Pigments erlaubt beispielsweise die Applikation der Identzeichenfolge mittels eines Lasers.

Es ist aber auch möglich, hiermit Veränderungen der Lumineszenz in Teilbereichen der Markierungsschicht zu bewirken. Beispielsweise kann durch Einstrahlung mittels Laserlicht einer vorgegebenen Dosisleistung entweder eine Erhöhung der Permittivität von Komponenten der Markierungsschicht in unmittelbarer Umgebung (beispielsweise innerhalb einer Fläche von 100 µm² bis 1 mm², insbesondere 1000 µm² bis 10000 µm², in einer Ebene parallel zu einer Hauptfläche der Markierungsschicht) beispielsweise eines Elektrolumineszenzpigments erreicht werden, beispielsweise im Wege einer Phasenumwandlung, oder beispielsweise durch Pyrolyse die Permittivität von Komponenten der Markierungsschicht in unmittelbarer Umgebung (beispielsweise innerhalb einer Fläche von 0,1 µm² bis 1 mm², insbesondere 1 µm² bis 100 µm², in einer Ebene parallel zu einer Hauptfläche der Markierungsschicht) eines Elektrolumineszenzpigments so stark reduziert werden, dass eine Elektrolumineszenz in diesem Bereich praktisch nicht mehr stattfindet. Ebenso ist es möglich die Photolumineszenz von entsprechenden Lumineszenzsubstanzen durch beispielsweise Pyrolyse zu reduzieren. In ersterem Fall zeichnen sich die Teilbereiche durch gegenüber der Umgebung z.B. verstärkte Elektrolumineszenz aus, im zweiten Fall durch verringerte oder völlig unterdrückte Elektrolumineszenz. In ersterem Fall können die Teilbereiche ein Muster bilden, welches in einem elektrischen Wechselfeld besonders hell ist, im zweiten Fall ist dagegen gleichsam ein Negativmuster gebildet durch die vergleichsweise dunklen Teilbereiche. Ersteres läßt sich mit vergleichsweise geringen Dosisleistungen des Lasers erzielen, letzteres mit vergleichsweise hohen Dosisleistungen. Die für eine Markierungsschicht mit bestimmter Zusammensetzung geeignete Dosisleistung für einen der beiden Fälle läßt sich jeweils mittels einfacher Versuche bzw. Versuchsreihen bestimmen, wobei beispielsweise die Markierungsschicht an verschiedene vorgegebenen Stellen mit unterschiedlichen und den Stellen zugeordneten Dosisleistungen bestrahlt wird und dann die Verstärkung und/oder Verringerung der Elektrolumineszenz quantitativ aufgenommen wird. Bei Beobachtung der gewünschten quantitativen Veränderung ist die der betreffenden Stelle zugeordnete Dosisleistung die geeignete. Das mittels der Modulation der Lumineszenzintensität in Teilbereichen der Markierungsschicht erzeugte vorgegebene Muster verändert einerseits das Zufallsmuster oder Zufallsteilmuster (vor deren messtechnischer Erfassung), kann aber andererseits seinerseits als Sicherheitsmerkmal eingesetzt werden, beispielsweise durch Zuordnung einer zweiten Zeichenfolge zu dem vorgegebenen (und vorzugsweise für jedes Dokument individuellen) Muster und Integration der zweiten Zeichenfolge in die Identzeichenfolge oder separate Applikation der zweiten Zeichenfolge. Eine messtechnische Erfassung vor der Zuordnung ist möglich, jedoch nicht notwendig, da mittels der Steuerung des Lasers das vorgebene Muster erzeugt und somit bereits bei dessen Herstellung definiert ist. Es handelt sich bei dem in dieser ergänzenden Weiterbildung beschriebenen vorgegebenen Muster jedoch um ein von dem Zufallsmuster oder Zufallsteilmuster (ggf. verändert, wie beschrieben) unterschiedliches Sicherheitsmerkmal.

Für eine solche Modulation der Luminszenz ist aber die Anwesenheit eines lasersensitiven Pigmentes nicht zwingend erforderlich. So kann beispielsweise auch ohne ein solches Pigment mittels Laser ein verändertes (Teil-) Muster analog den vorstehenden Ausführungen erzeugt werden. Denn mit dem Eintrag thermischer Energie durch die (lokale und entsprechend dem Muster vorgegebene) Laserbestrahlung wird ein lokales Aufschmelzen in der Markierungsschicht und so in der unmittelbaren Umgebung der Luminszenzsubstanz erzeugt. Dadurch wiederum wird die räumliche Verteilung des elektrisch leitfähiges Material enthaltenden Pigments, verglichen mit der nicht aufgeschmolzenen Umgebung innerhalb der Markierungsschicht, verändert. Hierdurch erfolgt eine Veränderung der Feldverdrängung und im Falle eines Elektroluminophoren folglich eine lokale Veränderung der Lumineszenz auf Anregung mit elektrischen Feldern. Je nach Dauer und Dosis der Laserstrahlung sowie der (lokalen) Konzentration des elektrisch leitfähiges Material enthaltenden Pigments kann dadurch eine Verstärkung oder Abschwächung der Elektrolumineszenz in den durch Laser bestrahlten Bereichen erreicht werden.

In einer weiteren Variante ist das elektrisch leitfähiges Material enthaltende Pigment selbst ein lasersensitives Pigment. Durch die lokale Bestrahlung mittels Laser werden dann sowohl die dielektrischen Eigenschaften der Umgebung der Lumineszenzsubstanz als auch die elektrischen Eigenschaften des elektrisch leitfähigen Materials selbst verändert, wiederum mit der Folge der Modulation (Verstärkung oder Abschwächung) der Elektrolumineszenz bei Anregung mittels elektrischer Felder. Es gelten ansonsten die vorstehenden Ausführungen analog.

Als lasersensitive Pigmente sind alle im technologischen Bereich der Sicherheits- und/oder Wertprodukte bekannte Pigmente einsetzbar. Sie können beispielsweise aus organischen Polymeren gebildet sein, welche eine hohe Absorption der Laserstrahlung aufweisen, beispielsweise PET, ABS, Polystyrol, PPO, Polyphenylensulfid, Polyphenylensulfon, Polyimidsulfon. Es kann sich aber auch beispielsweise um LCPs handeln. Besonders geeignet sind mikrovermahlene Thermoplaste mit einem sehr hohen Schmelzbereich von mehr als 300 °C. Die Teilchengröße ist typischerweise im Bereich von 01, bis 100 µm, insbesondere 0,1 bis 50 µm, vorzugsweise 1 bis 20 µm. Die Polymerpartikel können des weiteren lichtsensitive Füllstoffe oder Pigmente enthalten, beispielsweise in einer Menge von 0,1 bis 90 Gew.-%, bezogen auf das lasersensitive Pigment. Dabei kann es sich auch um elektrisch leitfähige Pigmente und/oder Effektpigmente und/oder Farbstoffe, wie vorstehend beschrieben handeln. Es kann sich aber auch um Oxide, Hydroxide, Sulfide, Sulfate oder Phosphate von Metallen, wie beispielsweise Cu, Bi, Sn, Zn, Ag, Sb, Mn, Fe, Ni, oder Cr handeln. Insbesondere basisches Cu(II)hydroxidphosphat ist einsetzbar. Speziell zu nennen ist ein Produkt der Erhitzung von blauem Cu(II)orthophosphat (Cu₃(PO₄)₂*3H₂O) auf 100 bis 200 °C entsteht und eine Summenformel Cu₃(PO₄)₂*Cu(OH)₂ aufweist. Weitere geeignete Kupferphosphate sind: Cu₃(PO₄)₂*3Cu(OH)₂, Cu₃(PQ₄)₂*2Cu(OH)₂*2H₂O, 4CuO*P₂O₅, 4CuO*P₂O₅*3H₂O, 4CuO*P₂O₅*1,5H₂O und 4CuO*P₂O₅*1,2H₂O.

Geeignete Laserstrahlung weist eine Wellenlänge im Bereich 150 nm bis 10600 nm, insbesondere 150 nm bis 1100 nm, auf. Einsetzbar sind beispielsweise CO₂-Laser (10600 nm), Nd:YAG-Laser (1064 nm bzw. 532 nm), und gepulste UV-Laser (Excimer-Laser. Die Energiedichte liegt im allgemeinen im Bereich von 0,3 mJ/cm² bis 50 J/cm², insbesondere im Bereich 0,3 mJ/cm² bis 10 J/cm².

Die Herstellung einer erfindungsgemäßen Markierungsschicht erfolgt, wie weiter oben erläutert, beispielsweise durch Auftrag einer Zubereitung mit den vorstehend diskutierten Pigmenten, beispielsweise im Wege des Druckes auf das Substrat. Die vorstehend genannten Pigmente, Substanzen und Partikel liegen in der Zubereitung dann in einer solchen geeigneten Konzentration vor, dass ein Verdrucken der Zubereitung noch problemlos möglich ist. So beträgt die Konzentration der Lumineszenzsubstanzen in der Zubereitung 0,01 bis 40 Gew.-%, vorzugsweise 1 bis 20 oder 10 Gew.%, bezogen auf die Zubereitung. Dabei können die (Gewichts-) Verhältnisse der Anteile der verschiedenen

Lumineszenzsubstanzen grundsätzlich beliebig sein, im Falle von zwei verschiedenen Lumineszenzsubstanzen beispielsweise von 1:99 bis 99:1, insbesondere 20:80 bis 80:20, meist 40:60 bis 60:40. Das elektrisch leitfähige Pigment liegt dagegen im allgemeinen in einer Konzentration von 0,1 bis 20 Gew.-%, insbesondere von 1 bis 10 Gew.-% bezogen auf die Zubereitung, in dieser vor. Für den Fall, dass die Markierungsschicht auch plättchenförmige Effektpigmente und/oder organische oder anorganische Farbpigmente enthalten soll, sind diese in der Zubereitung in einer Konzentration von 0,01 bis 40 Gew.-%, vorzugsweise 2 bis 20 Gew.-% bezogen auf die Zubereitung, enthalten. Für den Fall, dass die Markierungsschicht auch lasersensitive Pigmente enthalten soll, sind diese in der Zubereitung in einer Konzentration von 0,01 bis 20 Gew.-%, vorzugsweise 0,1 bis 10 Gew.-% bezogen auf die Zubereitung, enthalten. Die genannten Pigmente und Partikel können der Zubereitung einzeln oder im Gemisch zugeführt werden. Dies kann in Form der pulverförmigen Pigmente und Partikel erfolgen. Vorzugsweise werden die oben genannten Pigmente und Partikel jedoch einzeln oder im Gemisch aus zumindest zwei verschiedenen Arten von fließfähigen Pigmentpräparationen oder Trockenpräparaten in die Zubereitung eingebracht. Diese enthalten neben den Pigmentbestandteilen mindestens noch ein geeignetes Bindemittel. So kann beispielsweise eine Pigmentpräparation oder ein Trockenpräparat aus einem Gemisch aus einer partikulären Substanz mit elektrolumineszierenden Eigenschaften und einem transparenten elektrisch leitfähigen Pigment hergestellt werden, dem wahlweise noch ein oder mehrere Effekt- und/oder Farbpigmente und ggf. das lasersensitive Pigment zugemischt werden. Einzelpräparationen oder andere Kombinationen sind ebenfalls möglich. Unter fließfähigen Pigmentpräparationen werden insbesondere Pasten oder Anteigungen verstanden, welche neben den genannten Pigmenten noch Bindemittel, Lösemittel und optional ein oder mehrere Additive enthalten können. Die genannten Trockenpräparate enthalten in der Regel dieselben Zusatzstoffe, jedoch bei weitestgehend reduziertem Lösemittelgehalt. Als Trockenpräparate werden aber auch Präparate angesehen, welche 0 bis 8 Gew.-%, vorzugsweise 2 bis 8 Gew.-% und insbesondere 3 bis 6 Gew.-% an Wasser und/oder einem Lösemittel oder Lösemittelgemisch enthalten. Diese Trockenpräparate liegen vorzugsweise als Pearlets, Briketts, Pellets, Granulate, Chips, Würstchen oder in ähnlichen Formen vor und weisen in der Regel Teilchengrößen von etwa 0,280 mm auf. Solche fließfähigen Pigmentpräparationen und Trockenpräparate erleichtern den Transport, die Lagerung sowie das gleichmäßige Einbringen der Pigmente in die Druckfarbe, verhindern ein Entmischen von Pigmenten und weiteren Bestandteilen und fördern ein gutes Redispergierverhalten der Druckfarben. Neben den Pigmentbestandteilen enthält die Zubereitung meist ein oder mehrere geeignete Bindemittel, typischerweise in einer Menge von 5 bis 70 Gew.-%, und optional weitere Zusatzstoffe wie Lösemittel, beispielsweise in einer Menge von 5 bis 70 Gew.-%, sowie Additive, wie Haftvermittler, Dispergierhilfen, Trocknungsbeschleuniger, Fotoinitiatoren und dergleichen, die in solchen Zubereitungen gebräuchlich sind, in einer Menge von typischerweise 0,1 bis 20 Gew.-%. Die vorstehenden Gewichtsanteile addieren sich dabei stets zu 100 Gew.-%. In der fertigen Markierungsschicht sind dann die betreffenden Komponenten in Mengen zugegen, welche sich aus dem Abzug des Anteils der Lösemittel aus der Zubereitung berechnen. Es ist selbstverständlich, dass diese Bindemittel und Zusatzstoffe an das zu verwendende Druckverfahren angepasst werden und dass die Zubereitung eine angemessene Viskosität aufweist.

Wie bereits angesprochen, kann die Markierungsschicht aber auch vorgefertigt sein. Geeignete Schichtmaterialien umfassen Papiere verschiedener Art oder polymeren Materialien, können jedoch auch textile (gewebt oder gewirkt) Materialien oder Metalle etc. sein.

Basiert die Markierungsschicht auf einer polymeren Schicht, so weist sie zwei im wesentlichen parallel zueinander liegende Oberflächen auf und enthält die vorstehend beschriebenen verschiedenen Pigmente in den beschriebenen Varianten und Optionen. Die Konzentrationen der verschiedenen Substanzen und ggf. eingerichteten Pigmente liegen dabei grundsätzlich in Bereichen, wie vorstehend für die Zubereitung beschrieben, nur bezogen auf das Gewicht der Markierungsschicht. Die eingesetzten Substanzen und Pigmente werden in die polymere Grundmasse bevorzugt in Form von Masterbatches eingebracht. Diese enthalten neben den Pigmentbestandteilen und Substanzen noch geeignete Mengen an Bindemitteln, Lösemitteln und ggf. weitere gebräuchliche Hilfs- und Zusatzstoffe. Als Polymere sind dabei alle thermoplastischen Kunststoffe einsetzbar, die gegenüber den Lumineszenzsubstanzen sowie den ggf. eingerichteten zusätzlichen Pigmenten und Substanzen ein inertes Verhalten zeigen. Die Polymere sollten nicht elektrisch leitfähig sein oder die elektrische Leitfähigkeit der polymeren Schicht verstärken. Im Falle von Elektrolumineszenssubstanzen ist es insbesondere zweckmäßig, wenn die Markierungsschicht als solche nicht durchgängig elektrisch leitfähig ist, obwohl in ihr elektrisch leitfähige Pigmente enthalten sind, da es sonst zu Kurzschlüssen kommen kann. Vorzugsweise ist die Markierungsschicht transparent. Daher werden bevorzugt transparente Polymere eingesetzt. Dies trifft beispielsweise auf Polystyrol, Polyvinylchlorid, Polycarbonat sowie deren Misch- und Pfropfpolymerisate, Polyvinylidenchlorid und -fluorid, Polyamide, Polyolefine, Polyacryl- und -vinylester, thermoplastische Polyurethane, Celluloseester und dergleichen zu. Sie könnten einzeln oder in geeigneten Gemischen eingesetzt werden. Außerdem kann die Markierungsschicht zusätzlich gebräuchliche Hilfs- und Zusatzstoffe wie Füllstoffe, UV-Stabilisatoren, Inhibitoren, Flammschutzmittel, Gleitmittel, Weichmacher, Lösemittel, Dispergiermittel und zusätzliche Farbstoffe bzw. organische und/oder anorganische Farbpigmente enthalten. Die Markierungsschicht wird vorzugsweise durch verschiedene geeignete Verfahren wie Filmgießen, Schleudern, Extrusionsverfahren, Kalandrierung oder Pressverfahren, aber insbesondere durch Extrusionsverfahren oder über ein Folienblasverfahren hergestellt. Dazu werden die verschiedenen Ausgangsstoffe miteinander gemischt und in geeigneten, allgemein bekannten Anlagen zu Polymerschichten in Form von Folien verschiedener Stärke oder dünnen Platten verarbeitet. Dabei werden ggf. in der Polymermasse enthaltenen plättchenförmigen Pigmente (Effektpigmente und ggf. auch die elektrisch leitfähigen Pigmente) an den Oberflächen der Werkzeuge ausgerichtet und sind daher in den entstehenden polymeren Schichten im wesentlichen parallel zu den Oberflächen der polymeren Schicht orientiert. Streck- und Zugvorgänge beim Folienblasen oder als dem Extrudieren nachgeordnete Arbeitsschritte verstärken diese Orientierung der Pigmente zusätzlich. Bei der nachfolgenden Abkühlung wird diese Orientierung fixiert. Ein Entmischungs- oder Absetzverhalten des eingesetzten Pigmentgemisches ist in den fertigen Markierungsschichten nicht festzustellen. Es sollte jedoch darauf geachtet werden, dass keine zu großen Scherkräfte auf die Pigmentbestandteile einwirken, um ihrer Zerstörung vorzubeugen.

Statt in einem polymeren Material können die Lumineszenzsubstanzen und ggf. eingerichteten Pigmente auch in Papierrohmassen oder textile Rohmassen eingebracht werden zur Bildung der Markierungsschicht. Eine solche Markierungsschicht wird hergestellt, indem neben den genannten Bestandteilen alle Grundmaterialien und Hilfsstoffe zugegeben werden, welche insbesondere in der Papierherstellung gebräuchlich sind. Änderungen im gewöhnlichen Verfahrensablauf ergeben sich durch die Lumineszenzsubstanzen und ggf. eingerichteten Pigmente nicht. Vielmehr ist deren Konzentration so gewählt, dass alle gängigen Verfahren, beispielsweise der Papierherstellung, angewandt werden können. Diese sind dem Fachmann bekannt und müssen daher hier nicht näher erläutert werden. Es sollte jedoch, wie vorab bereits beschrieben, darauf geachtet werden, dass die Pigmente im Herstellungsverfahren der Papiere und Textilien nicht beschädigt oder zerstört werden und dass im entstehenden Papier oder Textil keine durchgängige elektrische Leitfähigkeit auftritt. Als Substrate auf Papierbasis sind alle gebräuchlichen Arten von Papieren, insbesondere aber Sicherheitspapiere mit Flächengewichten bis zu. 200g/m², bevorzugt solche aus Baumwollfasern und/oder textilen Materialien, einsetzbar.

Die Erfindung betrifft des weiteren ein Sicherheits- und/oder Wertprodukt, insbesondere Sicherheits- und/oder Wertdokument, erhältlich mit einem erfindungsgemäßen Verfahren. Ein solches Sicherheits- und/oder Wertprodukt ist dadurch gekennzeichnet, dass zwei verschiedene und unter verschiedenen Bedingungen der Anregung der Lumineszenz emittierende Lumineszenzsubstanzen in der Markierungsschicht eingerichtet sind, wobei die Zeichenfolge entweder aus einem Zufallsteilmuster bei Anregung lediglich einer der Lumineszenzsubstanzen oder aus einem Zufallsmuster bei Anregung beider Lumineszenzsubstanzen gebildet ist. Dabei kann das Substrat durch das Sicherheits- und/oder Wertprodukt selbst gebildet sein. Es kann aber auch vorgesehen sein, dass die Markierungsschicht auf einem flächigen Substrat angeordnet ist, welches dann seinerseits auf dem Sicherheits- und/oder Wertprodukt angebracht, beispielsweise aufgeklebt etc., oder hierin integriert, beispielsweise einlaminiert etc., ist. In letzterem Fall kann das Substrat aus einer Schicht bestehen oder auch mehrschichtig sein.

Schließlich betrifft die Erfindung auch ein Verfahren zur Verifizierung eines Sicherheits- und/oder Wertprodukts, insbesondere eines erfindungsgemäßen Sicherheits- und/oder Wertdokuments, wobei das Sicherheits- und/oder Wertprodukt solchen die Lumineszenz anregenden Bedingungen ausgesetzt wird, welche zur Erzeugung des Zufallsmusters oder des Zufallsteilmusters verwendet wurden, wobei eine ortsaufgelöste und optional intensitätsaufgelöste Aufnahme der vom Sicherheits- und/oder Wertprodukt emittierten Lumineszenzstrahlung erfolgt, wobei aus dem Zufallsmuster oder dem Zufallsteilmuster die zugeordnete Zeichenfolge bestimmt wird, wobei eine Identzeichenfolge aus dem Sicherheits- und/oder Wertprodukt ausgelesen wird, wobei die Zeichenfolge mit der Identzeichenfolge verglichen wird, und wobei das Sicherheits- und/oder Wertprodukt bei Nichtübereinstimmung von Zeichenfolge und Identzeichenfolge als unecht und bei Übereinstimmung von Zeichenfolge und Identzeichenfolge als echt eingestuft wird. Eine ortsaufgelöste und ggf. intensitätsaufgelöste Aufnahme kann beispielsweise mittels einer Kamera, welche ein zweidimensionales Bild simultan oder scannend aufnimmt, erhalten werden. Lediglich als Beispiel einer geeigneten Kamera sei eine Kamera mit einem zweidimensionalen CCD Chip und einer dem CCD Chip vorgeschalteten Optik genannt. Die Aufnahme wird dabei entweder bei exakt vorgegebene Positionierung des Sicherheits- und/oder Wertprodukts gegenüber der Kamera und Anregung der Lumineszenz erzeugt, oder das Sicherheits- und/oder Wertprodukt enthält ein für alle Sicherheits- und/oder Wertprodukte gleiches und gleich positioniertes Referenzmuster, anhand welchem eine Koordinatendefinition des aufgenommenen Zufallsmusters bzw. Zufallteilmusters erfolgen kann. Dann ist eine Ausrichtung nicht erforderlich.

Von selbstständiger Bedeutung ist eine Variante der Erfindung gemäß einem Verfahren zur Herstellung eines Sicherheits- und/oder Wertproduktes, umfassend
a) vollstandiges oder partielles Beschichten eines Substrates mit einer Markierungsschicht, welche mindestens eine partikulare Elektrolumineszenzsubstanz und ein ein elektrisch leitfahiges Material enthaltendes Pigment sowie mindestens ein weiteres partikulares Material mit optisch sichtbaren und/oder maschinell detektierbaren optischen Eigenschaften enthält, wobei zumindest die Elektrolumineszenzsubstanz und das ein elektrisch leitfahiges Material enthaltende Pigment in der Markierungsschicht statistisch lateral verteilt sind,
b) Anregung der Markierungsschicht mittels eines elektromagnetischen Wechselfeldes, so dass die Elektrolumineszenzsubstanz eine detektierbare Strahlung emittiert, wobei das durch die emittierenden Partikel gebildete (Leucht)Muster ein für das Sicherheits- und/oder Wertprodukt individuelles Zufallsmuster darstellt,
c) messtechnisches Erfassen des Zufallsmusters aus Schritt b) und Zuordnen einer eindeutigen Zeichenfolge hierzu,
d) Registrieren der in Schritt c) erhaltenen Zeichenfolge innerhalb oder außerhalb des Sicherheits- und/oder Wertproduktes sowie
e) Sichtung und/oder maschinelle Erfassung der optischen Eigenschaften des weiteren partikularen Materials und optional Registrierung derselben.

In aller Regel wird das weitere partikuläre Material verschieden von der Elekrolumineszenzsubstanz sowie dem elektrisch leitfähigen Material sein. Auch kann das elektrisch leitfähige Material verschieden von der Elektrolumineszenzsubstanz sein, dies ist aber auch nicht zwingend.

Der Begriff der Sichtung umfasst die Inaugenscheinnahme durch eine Person. Im Falle der Sichtung erfolgt die Registrierung, beispielsweise in einer zentralen oder dezentralen Datenbank, durch Eingabe durch eine Person.
In der Markierungsschicht kann ein Gemisch aus mindestens zwei partikularen Elektrolumineszenzsubstanzen vorliegen, die unter denselben Anregungsbedingungen jeweils Strahlung verschiedener Wellenlangenbereiche emittieren oder unter jeweils verschiedenen Anregungsbedingungen Strahlung emittieren. Das weitere partikulare Material ist vorzugsweise ein in der Markierungsschicht statistisch lateral verteiltes Photolumiphore.

Im Einzelnen kann die Markierungsschicht Bedingungen ausgesetzt werden, die von den Anregungsbedingungen der Elektrolumineszenzsubstanz verschieden sind und bei denen das Photolumiphore eine detektierbare Strahlung emittiert, wobei das durch die emittierenden Photolumiphor-Partikel gebildete (Leucht)muster ein für das Sicherheits und/oder Wertprodukt individuelles Zufallsteilmuster darstellt, das Zufallsteilmuster messtechnisch erfasst und diesem eine eindeutige (zweite und von der vorstehenden ersten Zeichenfolge verschiedenen oder hiermit gleichen) Zeichenfolge zugeordnet werden, und diese Zeichenfolge innerhalb oder außerhalb des Sicherheits- und/oder Wertproduktes registriert werden. Das Photolumiphore wird in der Regel durch eine Exposition der Markierungsschicht mit Licht eines definierten Wellenlängenbereiches im sichtbaren, UV- und/oder IR-Bereich des Sonnenspektrums zur Strahlung angeregt werden. Die dem Zufallsmuster und gegebenenfalls dem Zufallsteilmuster zugeordnete(n) Zeichenfolge(n) wird vorzugsweise als Identzeichenfolge(n) auf dem Sicherheits- und/oder Wertprodukt lesbar appliziert und/oder hierin lesbar integriert.

Eine Weiterbildung ist dadurch gekennzeichnet, dass die Markierungsschicht als weiteres (und von den vorstehenden Substanzen oder Materialien verschiedenes, zusätzlich oder an Stelle des Photoluminophoren vorgesehenes) partikulares Material ein organisches und/oder anorganisches Absorptionsfarbpigment und/oder ein Effektpigment enthält. Des Weiteren kann die Markierungsschicht zusätzlich ein lasersensitives Pigment enthalten. Das ein elektrisch leitfähiges Material enthaltende Pigment kann transparent oder semitransparent sein.

Vorzugsweise wird aus dem in Schritt b) erhaltenen (Zufalls-) Muster eine Hash-Funktion berechnet, aus welcher eine Zeichenfolge gebildet wird. Ebenso oder zusätzlich kann aus dem durch das Photolumiphore gebildeten Zufallsteilmuster eine Hash-Funktion berechnet werden, aus welcher eine Zeichenfolge gebildet wird. Die Identzeichenfolge(n) ist grundsätzlich beliebig, kann aber vorzugsweise eine Seriennummer oder einen Teil einer Seriennummer bilden.

In einer Weiterbildung kann das Zufallsmuster und/oder das Zufallsteilmuster vor dem messtechnischen Erfassen desselben mit einer definierten und vorgegebenen Strahlungsdosis einer Laserstrahlung verändert werden.

Eine weiterhin selbstständige Variante der Erfindung betrifft ein Sicherheits- und/oder Wertprodukt mit einer Markierungsschicht, welche zumindest eine partikulare Lumineszenzsubstanz in statistischer lateraler Verteilung enthält, wobei bei Anregung der Lumineszenz die Lumineszenzsubstanz in Aufsicht auf die Markierungsschicht Licht in einem Zufallsmuster emittiert, wobei aus dem messtechnisch erfassten Zufallsmuster eine dem Zufallsmuster in eineindeutiger Weise zugeordnete Zeichenfolge gebildet ist, und dadurch gekennzeichnet, dass die partikulare Lumineszenzsubstanz eine Elektrolumineszenzsubstanz ist und in der Markierungsschicht mindestens ein weiteres partikuläres Material mit optisch sichtbaren und/oder maschinell detektierbaren optischen Eigenschaften enthalten ist, wobei die Zeichenfolge aus einem Zufallsmuster bei der Anregung der Elektrolumineszenzsubstanz gebildet wird, oder aus einem Zufallsteilmuster, welches bei der Anregung oder Sichtung des weiteren partikularen Materials gebildet wird, und/oder aus einer Kombination, beispielsweise einer Summe, von Zufallsmuster und Zufallsteilmuster gebildet ist.

Schließlich von selbstständiger Bedeutung ist ein Verfahren zur Verifizierung eines vorstehend beschriebenen Sicherheits- und/oder Wertproduktes, a) wobei das Sicherheits- und/oder Wertprodukt die Elektrolumineszenz anregenden Bedingungen ausgesetzt wird und aus der emittierten Strahlung ein Zufallsmuster gebildet wird, b) wobei aus einer Sichtung und/oder maschinelle Erfassung der optischen Eigenschaften eines weiteren partikularen Materials, welche gegebenenfalls nach Anregung einer Lumineszenz unter von a) verschiedenen Bedingungen sichtbar und/oder erfassbar sind, mindestens ein Zufallsteilmuster gebildet wird, c) wobei eine ortsaufgelöste und optional intensitätsaufgelöste Aufnahme der vom Sicherheits- und/oder Wertprodukt emittierten Strahlung des Zufallsmusters und/oder des Zufallsteilmusters und/oder eines anderweitig sichtbaren Zufallsteilmusters erfolgt, d) wobei aus dem Zufallsmuster und/oder dem Zufallsteilmuster mindestens eine zugeordnete Zeichenfolge bestimmt wird, e) wobei mindestens eine innerhalb oder außerhalb des Sicherheits- und Wertproduktes abgelegte und dem Sicherheits- und/oder Wertprodukt eineindeutig zugeordnete Identzeichenfolge ausgelesen wird, f) wobei die Zeichenfolge aus Schritt d) mit der Identzeichenfolge aus Schritt e) verglichen wird, g) wobei bei Übereinstimmung von Zeichenfolge und Identzeichenfolge das Sicherheits- und/oder Wertprodukt als echt und bei Nichtübereinstimmung von Zeichenfolge and Identzeichenfolge als unecht eingestuft wird.

Grundsätzlich gelten alle Erläuterungen für verschiedene Ausführungsformen und Varianten der Erfindung auch für die jeweils anderen Ausführungsformen analog.

Im Folgenden wird die Erfindung anhand von lediglich Ausführungsformen darstellenden Beispielen näher erläutert. Es zeigen:
- Figur 1:: Aufsicht auf eine Markierungsschicht unter Tageslicht,
- Figur 2:: den Gegenstand der Figur 1 unter UV-Beleuchtung und
- Figur 3:: den Gegenstand der Figur 1 in einem elektrischen Wechselfeld.
- Beispiel 1:: Herstellung einer Markierungsschicht

Zunächst wird eine Zubereitung mit den folgenden Komponenten hergestellt: 5-70 Gew.-% Harz-/Bindersystem, 5-70 Gew.-% Lösungsmittel, 0-15 Gew.-%, insbesondere 0,1-15 Gew.-% Katalysatoren/Initiatoren, 0-20 Gew.-%, insbesondere 0,1-20 Gew.-% Additive, 0,1 bis 20 Gew.-% einer Mischung verschiedener Lumineszenzsubstanzen, beispielsweise einer Mischung aus einem oder mehreren Elektroluminophoren und einem oder mehreren Photoluminophoren, wobei das Mengenverhältnis Elektroluminophor zu Photoluminophor zwischen 0,1:99,9 und 99,9:0,1, insbesondere zwischen 20:80 und 80:20 liegen kann, 0-25 Gew.-%, insbesondere 5-25 Gew.-%, Effektpigment, insbesondere Interferenzpigment, oder eine Mischung verschiedener Effektpigmente, sowie 0,1 bis 10 Gew.-% lasersensitives Pigment oder eine Mischung verschiedener solcher Pigmente, wobei die Summe aller Komponenten stets 100 Gew.-% ergibt.

Als Harz-/Bindersystem sind beispielsweise reaktive Monomere, Oligomere, Präpolymere, wie mono-, di-, und/oder trifunktionale Acrylate geeignet. Käufliche Systeme umfassen beispielsweise die Laromer® Serie(BASF), SR-9003 oder SR-415 (Sartomer), Melamintränkharze, wie die Kauramin® oder Kaurit® Serie (BASF), beispielsweise -752, -753, -786 oder -787, oder Polymerdispersionen, wie die Kauro-pal® Serie (BASF), beispielsweise -937 oder 938. Ebenso sind Firnisse auf Basis von Nitrocellulose oder Leinöl einsetzbar.

Als Lösemittel kommen alle in der organischen Chemie üblichen Lösemittel in Frage mit der Maßgabe, dass eingesetzte Pigmente davon nicht auf- oder angelöst werden. Zu nennen wären Alkohole, wie Methanol, Ethanol oder Isopropanol, Ketone, wie Aceton oder 2-Bunanon, Ester, wie Ethylacetat, halogenierte Lösungsmittel, wie Dichlormethan, und/oder Aromaten, wie Toluol oder Xylol. Bei einer Wasser-basierten Zubereitung ist das wesentliche Lösemittel Wasser, wobei in geringen Mengen, typischerweise unter 20 Gew.-%, meist unter 10 Gew.-%, bezogen auf das Lösemittel, auch organische Lösemittel zugegen sein können.

Als Katalysatoren/Initiatoren können übliche Photoinitiatoren, wie Irgacure® 2020, Irgacure® 819 oder Darocure® 1173 (alle Ciba) eingesetzt werden. Für die genannten Kauramin® oder Kauramit® Harze sind die beispielsweise die Härter 527 oder 529 (BASF) geeignet. Auch Radikalbildner, wie beispielsweise Azo-Iso-Butyrodinitril, sind einsetzbar.

Als Additive kommen in Frage Hilfsstoffe, wie Antischaummittel (beispielsweise Byk-020 oder -052 von Byk), Surfactants (beispielsweise Baysilone von Bayer oder Byk-306 oder 310 von Byk), Konservierungsmittel (beispielsweise Borchers S1 von Borchers), etc. Bezüglich geeigneter Additive wird ergänzend auf Ullmann's chemische Enzyklopädie, Wiley Verlag, elektronische Ausgabe 2007, Stichwort "Paint Additives" oder www.borchers.de verwiesen.

Geeignete Elektroluminophore sind beispielsweise in der Literaturstelle S. Shionoya et al., Phosphor Handbook, Kapitel 9, Electroluminescent Materials, CRC Press, 1999, beschrieben. Geeignete Photoluminophore sind beispielsweise in der Literaturstelle Ullmann's chemische Enzyklopädie, Wiley Verlag, elektronische Ausgabe 2007, Stichwort "Luminescent Materials", beschrieben. Dabei weist die Lumineszenzsubstanz generell vorzugsweise eine grobkörnige Struktur auf, beispielsweise einen d90-Wert (Durchmesserbereich, welchen 90 Gew.-% der Partikel aufweisen, Rest typischerweise Feinanteil) von 5-50 µm aufweisen. Idealerweise ist die Größenverteilung sehr eng, insbesondere praktisch monomodal.

Einsetzbare Interferenzpigmente umfassen beispielsweise die vorab genannten Produkte verschiedener Firmen.

Einsetzbare lasersensitive Pigmente sind beispielsweise in der Literaturstelle EP 0 991 523 B1 beschrieben.

Die vorstehend beschriebene Zubereitung wird in einem einzigen Verfahrensschritt, beispielsweise mittels Siebdruck auf ein beliebiges, der Übersichtlichkeit halber nicht dargestelltes Substrat aufgebracht.

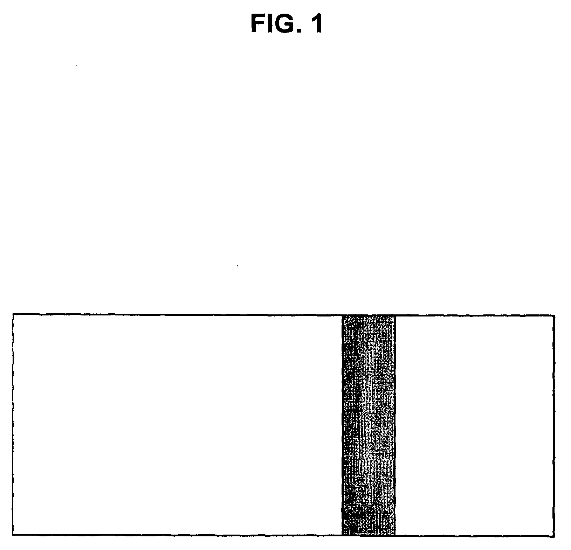

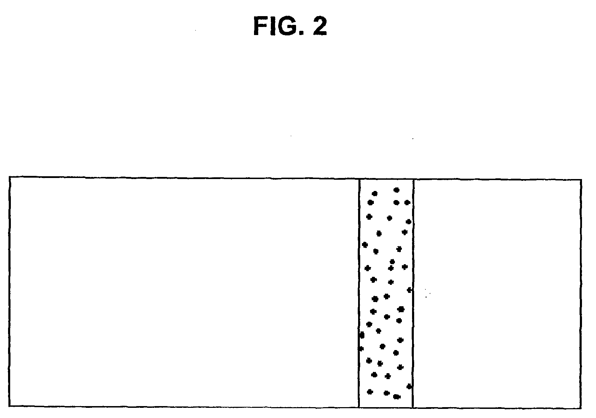

Man erhält eine Markierungsschicht, welche unter Tageslicht gemäß Figur 1 keine Lumineszenz zeigt, sondern lediglich beispielsweise zur einfachen visuellen Verfikation aufgrund eingesetzter Effektpigmente einen Farb-Flop (Farbänderung, beispielsweise von gold zu graublau oder von violett zu gold, unter verschiedenen Beobachtungswinkeln). Figur 2 zeigt die bei UV-Beleuchtung erzeugte Lumineszenz als "Sternenhimmel" mit grünen (mit ZnS als Elektroluminophore) und mit roten (mit Y₂O₂S:Eu als Photoluminophore) Sternen. Die Zeichenfolge kann dann entweder aus dem Zufallsteilmuster aus den Sternen einer der beiden Farben oder aus jenem aller Sterne erzeugt werden. In ersterem Fall muß die messtechnische Erfassung farbselektiv erfolgen, wie auch bei der Verifikation. In letzterem Fall reicht eine nicht-farbselektive messtechnische Erfassung.

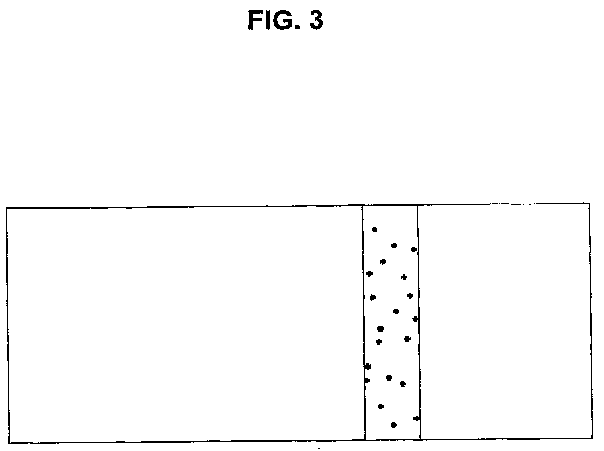

Figur 3 zeigt schließlich das im Wege der Elektrolumineszenz erhaltene Zufallsteilmuster bei Anregung mit elektrischen Wechselfeldern, aus welchem die Zeichenfolge generiert werden kann.

In den Figuren 2 und 3 sind die lumineszierenden Punkte gegenüber der vereinfachten Darstellung wesentlich zahlreicher und insbesondere zufällig verteilt und ergeben das Zufallsmuster bzw. Zufallsteilmuster.

### Beispiel 2: Modulation der Lumineszenz in Teilbereichen als nicht zwingende Option

Ein Laser überstreicht gemäß einem vorgegebenen Weg Teilbereiche, welche durch den vorgegebenen Weg des Laserstrahls ihrerseits vorgegebenen sind, wobei in den Teilbereichen eine lokale Pyrolyse durch die starke Absorption der Laserstrahlung in dem lasersensitiven Pigment und dessen unmittelbarer Umgebung (Durchmesser bis zu 10 µm um den Mittelpunkt eines lasersensitiven Pigments) stattfindet. Hierdurch wird die Permittivität in der unmittelbaren Umgebung eines lasersensitiven Pigments reduziert mit der Folge, dass ein in dieser Umgebung befindliches Elektroluminophor mit dem elektrischen Wechselfeld der gleichen Frequenz und Intensität, wie in Beispiel 1, Figur 3, nicht mehr zur Lumineszenz anregbar ist. Im Ergebnis ist neben dem Zufallsteilmuster der Figur 3 ein (nicht dargestelltes) zusätzliches vorgegebenes Muster entstanden, wobei die Teilbereiche gegenüber den anderen Bereichen eine verringerte Elektrolumineszenz aufweisen. Die Pyrolyse ist dabei aufgrund der Steuerung des Lasers, wie beschrieben lokal begrenzt, so dass die pyrolysierten Bereiche bei normalem Tageslicht und mit dem menschlichen Auge ohne technische Hilfsmittel praktisch nicht wahrnehmbar sind.

Statt dessen kann mit einer anderen (vergleichsweise niedrigen) Strahlendosis des Lasers aber auch eine Erhöhung der Permittivität in der Umgebung der lasersensitiven Pigmente durch Phasenumwandlung der Matrix oder anderer Pigmente erreicht werden, mit der Folge, dass bei Anregung mit dem gleichen elektrischen Wechselfeld die Lumineszenz in den Teilbereichen nunmehr erhöht ist. Auch diese Veränderung ist mit dem menschlichen Auge ohne Hilfsmittel nicht erkennbar.

### Beispiel 3: Anbringung der Identzeichenfolge

Mittels eines Computers, welcher in der optionalen Variante des Beispiels 2 auch den Weg des Lasers steuern kann, wird nach der messtechnischen Erfassung des Zufallsmusters und/oder des Zufallsteilmusters ein Hash-Wert mittels eines üblichen Hash-Algorithmus als Identzeichenfolge berechnet. Dieser Hash-Wert wird in Form einer Zeichenfolge zum Bestandteil einer der Markierungsschicht und so dem Sicherheits- und/oder Wertprodukt zugeordneten Seriennummer gemacht. In der Variante des Beispiels 2 wird in die Seriennummer zusätzlich ein zweiter Hash-Wert integriert, welcher dem vorgegebenen individuellen Muster zugeordnet ist, bzw. hieraus gewonnen wurde.
- Beispiel 4:: Verifizierung eines Sicherheits- und/oder Wertprodukts.

Das in Beispiel 3 erhaltene Sicherheits- und/oder Wertprodukt bzw. dessen Markierungsschicht wird den Bedingungen der Anregung der Lumineszenz, beispielsweise einem elektrischen Wechselfeld im Falle einer dem Zufallsteilmuster der Figur 3 zugeordneten Identzeichenfolge, ausgesetzt. Zugleich wird mittels einer zweidimensional auflösenden CCD Kamera das Zufallsteilmuster sowie die Seriennummer bzw. die Identzeichenfolge ausgelesen. Aus dem Zufallsteilmuster wird mit dem Algorithmus des Beispiels 3 ein Hash-Wert berechnet und mit der ausgelesenen Identzeichenfolge verglichen. Bei Übereinstimmung ist das Sicherheits- und/oder Wertprodukt verifiziert, bei Nichtübereinstimmung handelt es sich höchstwahrscheinlich um eine Fälschung.

## Patentansprüche

1. Verfahren zur Herstellung eines Sicherheits- und/oder Wertprodukts, insbesondere eines Sicherheits- und/oder Wertdokuments, mit den folgenden Verfahrensschritten:
a) ein Substrat wird mit einer Markierungsschicht, welche zumindest zwei verschiedene und unter verschiedenen Bedingungen der Anregung der Lumineszenz Licht emittierende partikuläre Lumineszenzsubstanzen enthält, beschichtet, wobei die Partikel der Lumineszenzsubstanzen statistisch lateral verteilt sind,
b1) die Markierungsschicht wird Anregungsbedingungen ausgesetzt, bei welchen die Lumineszenzsubstanzen lumineszieren, wobei das emittierte Licht ein für das Sicherheits- und/oder Wertprodukt individuelles Zufallsmuster bildet, und/oder
b2) die Markierungsschicht wird Anregungsbedingungen ausgesetzt, bei welchen nur eine der Lumineszenzsubstanzen luminesziert, wobei das emittierte Licht ein für das Sicherheits- und/oder Wertprodukt individuelles Zufallsteilmuster bildet,
c) das Zufallsmuster und/oder das Zufallsteilmuster wird messtechnisch erfasst und dem erfassten Zufallsmuster und/oder dem erfassten Zufallsteilmuster wird eine Zeichenfolge oder werden jeweils eine Zeichenfolge in vorzugsweise eineindeutiger Weise zugeordnet,
d) die in Stufe c) zugeordnete Zeichenfolge wird oder die zugeordneten Zeichenfolgen werden auf dem Sicherheits- und/oder Wertprodukt als Identzeichenfolge (3) lesbar appliziert und/oder hierin lesbar integriert und/oder in einer zentralen oder dezentralen Datenbank registriert.

2. Verfahren nach Anspruch 1, wobei eine erste Lumineszenzsubstanz ein partikuläres Elektroluminophore ist und wobei die Markierungsschicht (1) zusätzlich ein elektrisch leitfähiges Pigment bzw. Material enthält.

3. Verfahren nach Anspruch 1, wobei die Lumineszenzsubstanzen oder eine der Lumineszenzsubstanzen Photoluminophore sind.

4. Verfahren nach Anspruch 1, wobei eine Lumineszenzsubstanz ein partikuläres Elektroluminophores und die andere Lumineszenzsubstanz ein optional partikuläres Photoluminophores ist.

5. Verfahren nach Anspruch 2, wobei das elektrisch leitfähige Pigment entweder transparent oder semitransparent ist oder einen Farbeffekt aufweist.

6. Verfahren nach einem der Ansprüche 1 bis 5, wobei die Markierungsschicht (1) zusätzlich ein Absorptionsfarbpigment und/oder ein Effektpigment, aufweist.

7. Verfahren nach einem der Ansprüche 1 bis 6, wobei die Markierungsschicht (1) zusätzlich ein lasersensitives Pigment aufweist.

8. Verfahren nach einem der Ansprüche 1 bis 7, wobei in den Stufen b1) oder b2) das Zufallsmuster oder das Zufallsteilmuster durch eine Exposition der Markierungsschicht mit Licht einer definierten Wellenlänge oder mit zumindest zwei verschiedenen Wellenlängen, vorzugsweise im IR- und/oder UV-Bereich, höchstvorzugsweise nicht im sichtbaren Bereich erzeugt wird.

9. Verfahren nach einem der Ansprüche 1 bis 7, wobei in den Stufen b1) oder b2) das Zufallsmuster oder das Zufallsteilmuster durch eine Exposition der Markierungsschicht mit einem elektrischen Wechselfeld erzeugt wird.

10. Verfahren nach einem der Ansprüche 1 bis 9, wobei aus dem Zufallsmuster oder dem Zufallsteilmuster eine Hash-Funktion berechnet wird, aus welcher die Zeichenfolge gebildet wird.

11. Verfahren nach einem der Ansprüche 1 bis 10, wobei die Identzeichenfolge (3) eine Seriennummer oder einen Teil einer Seriennummer bildet.

12. Sicherheits- und/oder Wertprodukt mit einer Markierungsschicht, welche zumindest eine partikuläre Lumineszenzsubstanz in statistischer lateraler Verteilung enthält, wobei bei Anregung der Lumineszenz die Lumineszenzsubstanz in Aufsicht auf die Markierungsschicht Licht in einem Zufallsmuster emittiert, wobei aus dem messtechnisch erfassten Zufallsmuster eine dem Zufallsmuster in eineindeutiger Weise zugeordnete Zeichenfolge gebildet ist, wobei die Zeichenfolge auf oder in dem Sicherheits- und/oder Wertprodukt appliziert ist, **dadurch gekennzeichnet,**
**dass** zwei verschiedene und unter verschiedenen Bedingungen der Anregung der Lumineszenz emittierende Lumineszenzsubstanzen in der Markierungschicht eingerichtet sind, wobei die Zeichenfolge entweder aus einem Zufallsteilmuster bei Anregung lediglich einer der Lumineszenzsubstanzen oder aus einem Zufallsmuster bei Anregung beider Lumineszenzsubstanzen gebildet ist.

13. Verfahren zur Verifizierung eines Sicherheits- und/oder Wertprodukts, insbesondere eines Sicherheits- und/oder Wertdokuments, nach Anspruch 12, wobei das Sicherheits- und/oder Wertprodukt solchen die Lumineszenz anregenden Bedingungen ausgesetzt wird, welche zur Erzeugung des Zufallsmusters oder des Zufallsteilmusters verwendet wurde, wobei eine ortsaufgelöste und optional intensitätsaufgelöste Aufnahme der vom Sicherheits- und/oder Wertprodukt emittierten Lumineszenzstrahlung erfolgt, wobei aus dem Zufallsmuster oder dem Zufallsteilmuster die zugeordnete Zeichenfolge bestimmt wird, wobei eine Identzeichenfolge (3) aus dem Sicherheits- und/oder Wertprodukt ausgelesen wird, wobei die Zeichenfolge mit der Identzeichenfolge (3) verglichen wird, und wobei das Sicherheits- und/oder Wertprodukt bei Nichtübereinstimmung von Zeichenfolge und Identzeichenfolge (3) als unecht und bei Übereinstimmung von Zeichenfolge und Identzeichenfolge als echt eingestuft wird.

## Claims

1. A method for producing a security and/or value product, in particular a security and/or value document, comprising the following steps:
a) a substrate is coated with a marking layer, which includes at least two different particulate luminescent substances emitting light under different conditions of excitation of the luminescence, the particles of the luminescent substances being statistically laterally distributed,
b1)the marking layer is exposed to conditions of excitation, at which the luminescent substances luminescence, the emitted light forming a random pattern being individual for the security and/or value product, and/or
b2)the marking layer is exposed to conditions of excitation, at which only one of the luminescent substances luminescence, the emitted light forming a random partial pattern being individual for the security and/or value product,
c) the random pattern and/or the random partial pattern is measured, and a sequence of characters or one sequence of characters each is assigned to the detected random pattern and/or to the detected random partial pattern in a preferably one-to-one correspondence,
d) the sequence of characters assigned in step c) is applied or the sequences of characters assigned in step c) are applied onto the security and/or value product as an identification sequences of characters (3) in a readable manner and/or integrated therein in a readable manner and/or registered in a centralized or decentralized database.

2. The method according to claim 1, wherein a first luminescent substance is a particulate electroluminophore and wherein the marking layer (1) additionally includes an electrically conductive pigment or material.

3. The method according to claim 1, wherein the luminescent substances or one of the luminescent substances are photoluminophores.

4. The method according to claim 1, wherein one luminescent substance a particulate electroluminophore and the other luminescent substance is an optionally particulate photoluminophore.

5. The method according to claim 2, wherein the electrically conductive pigment is either transparent or semi-transparent or has a color effect.

6. The method according to one of claims 1 to 5, wherein the marking layer (1) additionally comprises an absorption color pigment and/or an effect pigment.

7. The method according to one of claims 1 to 6, wherein the marking layer (1) additionally comprises a laser-sensitive pigment.

8. The method according to one of claims 1 to 7, wherein in steps b1) or b2) the random pattern or the random partial pattern is generated by an exposition of the marking layer to light of a defined wavelength or to at least two different wavelengths, preferably in the IR and/or UV range, most preferably not in the visible range.

9. The method according to one of claims 1 to 7, wherein in steps b1) or b2) the random pattern or the random partial pattern is generated by an exposition of the marking layer to an alternate electric field.

10. The method according to one of claims 1 to 9, wherein from the random pattern or the random partial pattern, a hash function is calculated, from which the sequence of characters is formed.

11. The method according to one of claims 1 to 10, wherein the identification sequence of characters (3) forms a serial number or a portion of a serial number.

12. A security and/or value product with a marking layer, which includes at least one particulate luminescent substance in a statistical lateral distribution, wherein upon excitation of the luminescence the luminescent substance emits, in a top view of the marking layer, light in a random pattern, wherein from the measured random pattern a sequence of characters assigned to the random pattern in a one-to-one correspondence is formed, wherein the sequence of characters is applied onto or into the security and/or value product, **characterized by** that
two different luminescent substances emitting under different conditions of excitation of luminescence are provided in the marking layer, the sequence of characters being formed either of a random partial pattern upon excitation of only one of the luminescent substances or of a random pattern upon excitation of both luminescent substances.

13. A method for verifying a security and/or value product, in particular a security and/or value document, according to claim 12, wherein the security and/or value product is exposed to such conditions exciting the luminescence, which was used for generating the random pattern or the random partial pattern, wherein a location-resolved and optionally intensity-resolved recording of the luminescence radiation emitted by the security and/or value product takes place, wherein from the random pattern or the random partial pattern the assigned sequence of characters is determined, wherein an identification sequence of characters (3) is read from the security and/or value product, wherein the sequence of characters is compared to the identification sequence of characters (3), and wherein in case of a mismatch between the sequence of characters and the identification sequence of characters (3), the security and/or value product is classified as false, and in case of a match between the sequence of characters and the identification sequence of characters, is classified as real.

## Revendications

1. Procédé de fabrication d'un produit de sécurité et/ou de valeur, en particulier d'un document de sécurité et/ou de valeur, comprenant les étapes suivantes:
a) un substrat est recouvert d'une couche de marquage, qui comporte au moins deux substances luminescentes particulaires différentes à émission de lumière sous des conditions différentes d'excitation de la luminescence, les particules des substances luminescentes étant réparties de manière statistiquement latérale,
b1)la couche de marquage est exposée à des conditions d'excitation, auxquelles les substances luminescentes sont luminescentes, la lumière émise formant un motif aléatoire individuel pour le produit de sécurité et/ou de valeur, et/ou
b2)la couche de marquage est exposée à des conditions d'excitation, auxquelles seulement une des substances luminescentes est luminescente, la lumière émise formant un motif aléatoire partiel individuel pour le produit de sécurité et/ou de valeur,
c) le motif aléatoire et/ou le motif aléatoire partiel est mesuré, et une chaîne de caractères ou une chaîne de caractères chacune est associée de préférence en relation biunivoque au motif aléatoire mesuré et/ou au motif aléatoire partiel mesuré,
d) la chaîne de caractères associée dans l'étape c) est appliquée ou les chaînes de caractères associées dans l'étape c) sont appliquées sur le produit de sécurité et/ou de valeur comme une chaîne de caractères d'identification (3) d'une manière lisible et/ou sont intégrées là-dedans d'une manière lisible et/ou enregistrées dans une base de données centralisée ou décentralisée.

2. Procédé selon la revendication 1, dans lequel une première substance luminescente est un électroluminophore particulaire et dans lequel la couche de marquage (1) en addition comporte un pigment ou matériau électriquement conducteur.

3. Procédé selon la revendication 1, dans lequel les substances luminescentes ou une des substances luminescentes sont des photoluminophores.

4. Procédé selon la revendication 1, dans lequel une substance luminescente est un électroluminophore particulaire et l'autre substance luminescente est un photoluminophore optionnellement particulaire.

5. Procédé selon la revendication 2, dans lequel le pigment électriquement conducteur est transparent ou bien semi-transparent ou a un effet chromatique.

6. Procédé selon une des revendications 1 à 5, dans lequel la couche de marquage (1) en addition comprend un pigment de couleur d'absorption et/ou un pigment d'effet.

7. Procédé selon une des revendications 1 à 6, dans lequel la couche de marquage (1) en addition comprend un pigment sensible au laser.

8. Procédé selon une des revendications 1 à 7, dans lequel dans les étapes b1) ou b2) le motif aléatoire ou le motif aléatoire partiel est généré par une exposition de la couche de marquage à une lumière d'une longueur d'onde définie ou à au moins deux longueurs d'onde différentes, de préférence dans le domaine d'IR et/ou d'UV, de préférence la lus haute pas dans le domaine visible.

9. Procédé selon une des revendications 1 à 7, dans lequel dans les étapes b1) ou b2) le motif aléatoire ou le motif aléatoire partiel est généré par une exposition de la couche de marquage à un champ électrique alternatif.

10. Procédé selon une des revendications 1 à 9, dans lequel à partir du motif aléatoire ou du motif aléatoire partiel, une fonction de hachage est calculée, à partir de laquelle la chaîne de caractères est formée.

11. Procédé selon une des revendications 1 à 10, dans lequel la chaîne de caractères d'identification (3) forme un numéro de série ou une partie d'un numéro de série.

12. Produit de sécurité et/ou de valeur comprenant une couche de marquage, qui comporte au moins une substance luminescente particulaire répartie de manière statistiquement latérale, dans lequel lors d'une excitation de la luminescence la substance luminescente émet, dans une vue d'en haut de la couche de marquage, de la lumière à un motif aléatoire, dans lequel à partir du motif aléatoire mesuré une chaîne de caractères associée au motif aléatoire est formée en relation biunivoque, dans lequel la chaîne de caractères est appliquée sur ou dans le produit de sécurité et/ou de valeur, **caractérisé en ce que**
deux différentes substances luminescentes émettant sous der conditions d'excitation différentes de luminescence sont prévues dans la couche de marquage, la chaîne de caractères étant formée à partir d'un motif aléatoire partiel lors de l'excitation de seulement une des substances luminescentes ou partir d'un motif aléatoire lors de l'excitation des deux substances luminescentes.

13. Procédé de vérification d'un produit de sécurité et/ou de valeur, en particulier d'un document de sécurité et/ou de valeur, selon la revendication 12, dans lequel le produit de sécurité et/ou de valeur est exposé à des telles conditions excitant la luminescence, qui était utilisée pour la génération du motif aléatoire ou du motif aléatoire partiel, dans lequel un enregistrement résolu en espace et optionnellement résolu en intensité des rayons de luminescence émis par le produit de sécurité et/ou de valeur a lieu, dans lequel à partir du motif aléatoire ou du motif aléatoire partiel la chaîne de caractères associée est déterminée, dans lequel une chaîne de caractères d'identification (3) est lue à partir du produit de sécurité et/ou de valeur, dans lequel la chaîne de caractères est comparée à la chaîne de caractères d'identification (3), et dans lequel en cas d'une discordance entre la chaîne de caractères et la chaîne de caractères d'identification (3), le produit de sécurité et/ou de valeur est classé comme faux, et en cas d'une correspondance entre la chaîne de caractères et la chaîne de caractères d'identification, est classé comme vrai.
